Europäisches Patentamt

European Patent Office

Office européen des brevets

(19)

(11) **EP 1 605 575 A2**

(12) **EUROPEAN PATENT APPLICATION**

| | |
|---|---|
| (43) Date of publication:<br>**14.12.2005 Bulletin 2005/50** | (51) Int Cl.[7]: **H02K 24/00**, H02K 3/28 |

(21) Application number: **05002896.8**

(22) Date of filing: **11.02.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU** | (72) Inventors:<br>• **Aoki, Nao, c/o Minebea Co.,Ltd.**<br>  **Ohta-ku, Tokyo (JP)**<br>• **Kujirai, Hiroyuki, c/o Minebea Co.,Ltd.**<br>  **Ohta-ku, Tokyo (JP)** |
| (30) Priority: **07.06.2004 JP 2004169263** | (74) Representative: **Hoarton, Lloyd Douglas Charles** |
| (71) Applicant: **MINEBEA Co., Ltd.**<br>**Kitasaku-gun, Nagano-ken (JP)** | **Forrester & Boehmert,**<br>**Pettenkoferstrasse 20-22**<br>**80336 München (DE)** |

(54) **Continuous winding method for multi-resolver, and multi-resolver thereby**

(57)     A continuous winding method is applied to a multi-resolver including m resolver units (m is an integer not less than 2) joined together. Each resolver unit is composed of a stator and a rotor. The stator includes a stator yoke having a plurality of magnetic poles projecting from the stator yoke where the number of the magnetic poles corresponds to a shaft angle multiplier n (n is an integer not less than 1) and coils for predetermined uses wound around selected magnetic poles. The rotor has n salient poles. A coil for each use is independently and continuously wound around selected stator magnetic poles of the m resolver units.

EP 1 605 575 A2

Printed by Jouve, 75001 PARIS (FR)

**Description**

BACKGROUND OF THE INVENTION

Field of the Invention:

The present invention relates to a continuous winding method for a multi-resolver for winding coils of the resolver in a manner for reducing the number of wire connections, and to a multi-resolver to which the continuous winding method is applied.

Description of the Related Art:

Conventionally, when outputs of a plurality of resolver units are combined, output coils of the resolver units are connected for signal addition or subtraction. Thus, when an input voltage for excitation is applied to excitation coils of the resolver units, sin (sine) output voltages and cos (cosine) output voltages are output from respective output coils of the resolver units, and are combined.

In general, variable-reluctance (VR) resolvers are used as resolver units.

Conventionally known multi-resolvers include twin resolvers and recently developed, integral double resolvers.

Twin Resolver:

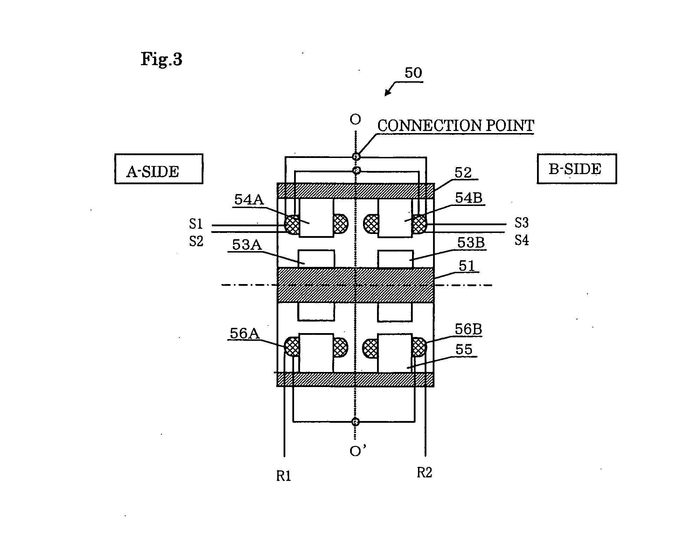

FIG. 3 is a cross-sectional view of a conventional twin resolver.

The twin resolver 50 shown in FIG. 3 includes two resolver units A and B which are assembled in a single case 52 in such a manner that the resolver units A and B share a rotary shaft 51 and are axially separated from each other. In FIG. 3, the resolver unit A is located on the A side and the resolver unit B is located on the B side with respect to a vertical dotted center line O - O' (see for example, Japanese Patent Application Laid-Open (*kokai*) No. H08-189805).

Each of the resolver units A and B is composed of a rotor and a stator, which are commonly used.

The rotor includes the rotary shaft 51, and a rotor magnetic pole 53A or 53B provided on the rotary shaft 51. The stator include a stator yoke 55 having a plurality of stator magnetic poles 54A or 54B projecting therefrom, and coils 56A or 56B applied to the stator magnetic poles 54A or 54B. Each of the coils 56A and 56B is composed of an input (excitation) coil (not shown), and output coils (not shown).

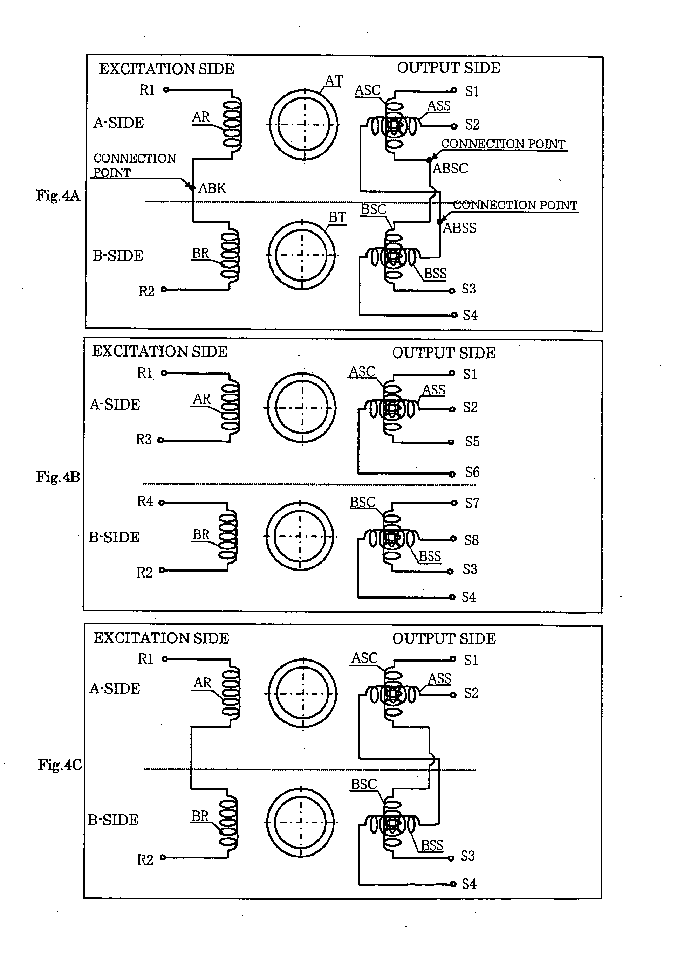

First ends of the respective excitation coils applied to the stator magnetic poles 54A and 54B of the resolver units A and B are extended to the outside as terminals R1 and R2, and second ends of the excitation coils are connected together. First ends of respective cos output coils applied to the stator magnetic poles of the resolver units A and B are extended to the outside as terminals S1 and S3, and second ends of the cos output coils are connected together. Similarly, first ends of respective sin output coils applied to the stator magnetic poles of the resolver units A and B are extended to the outside as terminals S2 and S4, and second ends of the sin output coils are connected together. The above-described coil connection is shown in FIG. 4A.

FIGS. 4A to 4C are circuit diagrams of output-waveform-combining circuits for combining outputs of two VR resolver units whose shaft angle multiplier is 1X (hereinafter referred to as "1X VR resolver units").

Specifically, FIG. 4A is a circuit diagram of an output-waveform-combining circuit for a conventional twin resolver which combines outputs of two 1X VR resolver units so as to output a 1X resolver output.

FIG. 4B is a circuit diagram of an output-waveform-combining circuit for an integral double resolver which combines outputs of two 1X VR resolver units so as to output a 1X resolver output. The circuit of FIG. 4B differs from that of FIG. 4A in that coil ends to be connected together are extended to the outside as terminals.

FIG. 4C is a circuit diagram of an output-waveform-combining circuit for a two-unit continuous-winding-type integral double resolver according to the present invention, which circuit combines outputs of two 1X VR resolver units so as to output a 1X VR revolver output. The circuit of FIG. 4C differs from that of FIG. 4B in that the respective coils of the two resolver units are continuously wound so as to eliminate coil connection.

In FIG. 4A, the resolver unit A is located on the A side and the resolver unit B is located on the B side with respect to a horizontal dotted line.

A first end of an excitation coil AR of the resolver unit A is extended to the outside as a terminal R1, and a second end of the excitation coil AR is connected with a first end of an excitation coil BR of the resolver unit B at a point ABK. A second end of the excitation coil BR of the resolver unit B is extended to the outside as a terminal R2.

A first end of a cos output coil ASC of the resolver unit A is extended to the outside as a terminal S1, and a second end of the cos output coil ASC of the resolver unit A is connected with a first end of a cos output coil BSC of the resolver unit B at a point ABSC. A second end of the cos output coil BSC of the resolver unit B is extended to the outside as a terminal S3.

Similarly, a first end of a sin output coil ASS of the resolver unit A is extended to the outside as a terminal S2, and a second end of the sin output coil ASS of the resolver unit A is connected with a first end of a sin output coil BSS of the resolver unit B at a point ABSS. A second end of the sin output coil BSS of the resolver unit B is extended to the outside as a terminal S4. Reference letters AT represent salient poles of the rotor of the resolver unit A, and reference letters BT represent salient poles of the rotor of the resolver unit B.

In the circuit of FIG. 4A, when an excitation voltage Vref input between the terminals R1 and R2 is X, a transformation ratio between the input and output coils of the resolver unit A is Ka, and a transformation ratio between the input and output coils of the resolver unit B is Kb, composite output voltages at an arbitrary rotational angle θ are represented as follows.

sin composite output voltage

$$= KaXsin\theta + KbXsin\ \theta = (Ka + Kb)Xsin\ \theta \qquad \text{Eq.1}$$

cos composite output voltage

$$= KaXcos\ \theta + Kbxcos\ \theta = (Ka + Kb)Xcos\ \theta \qquad \text{Eq.2}$$

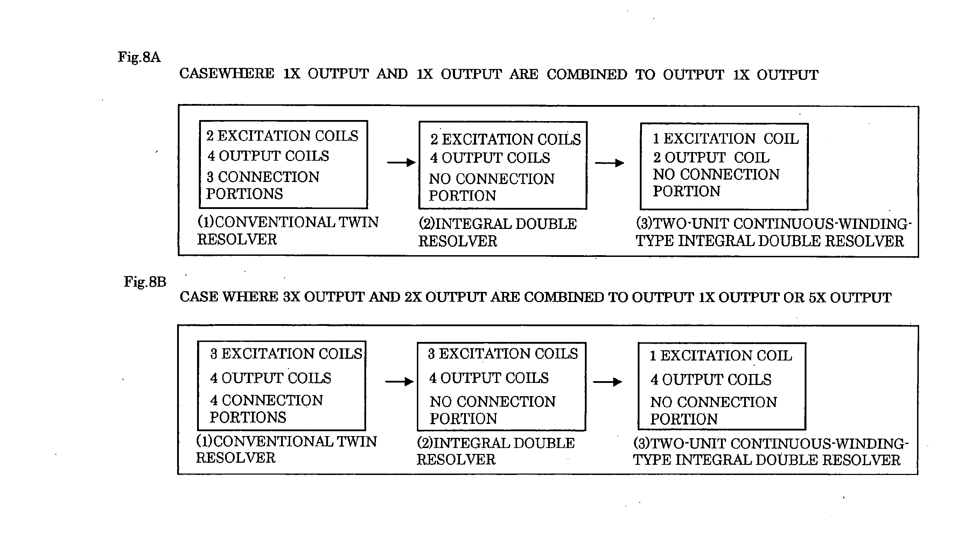

The coil data for the twin resolver shown in FIG. 4A are shown in section (1) of FIG. 8A.

FIGS. 8A and 8B are explanatory diagrams each showing the numbers of coils and connection portions for different winding schemes; i.e., different types of resolvers. FIG. 8A shows data for the case where two 1X output signals are combined so as to output a 1X resolver output. Section (1) of FIG. 8A shows the numbers of coils and connection portions of a conventional twin resolver; section (2) of FIG. 8A shows the numbers of coils and connection portions of an integral double resolver; and section (3) of FIG. 8A shows the numbers of coils and connection portions of a two-unit continuous-winding-type integral double resolver.

Specifically, as shown in section (1) of FIG. 8A, a conventional twin resolver includes two excitation coils (each of the resolver units A and B includes a single excitation coil). The conventional twin resolver includes two sin output coils (each of the resolver units A and B includes a single sin output coil), and two cos output coils (each of the resolver units A and B includes a single cos output coil). That is, the conventional twin resolver includes four output coils in total. The conventional twin resolver includes three connection portions (a single connection portion is present between the excitation coils, between the sin output coils, and between the cos output coils).

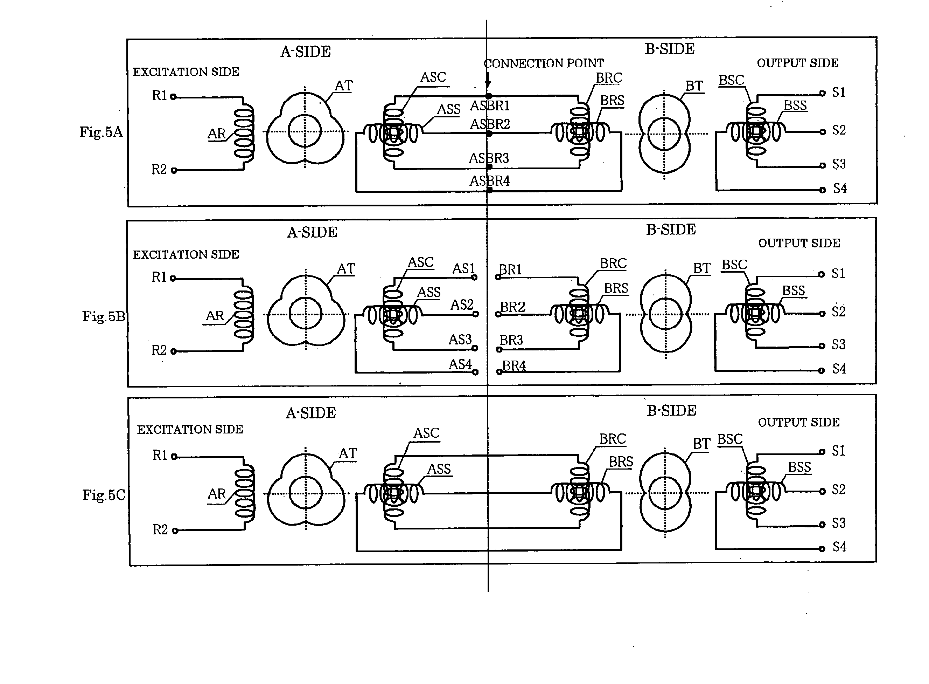

FIGS. 5A to 5C are circuit diagrams of output-waveform-combining circuits for combining outputs of a resolver unit whose shaft angle multiplier is 3X (hereinafter referred to as "3X VR resolver unit") and a resolver unit whose shaft angle multiplier is 2X (hereinafter referred to as "2X VR resolver unit") so as to output a 1X resolver output or a 5X resolver output.

Specifically, FIG. 5A is a circuit diagram of an output-waveform-combining circuit for a conventional twin resolver which combines outputs of the 3X VR resolver unit and the 2X VR resolver unit so as to output a 1X resolver output or a 5X resolver output.

FIG. 5B is a circuit diagram of an output-waveform-combining circuit for an integral double resolver which combines outputs of the 3X VR resolver unit and the 2X VR resolver unit so as to output a 1X resolver output or a 5X resolver output. The circuit of FIG. 5B differs from that of FIG. 5A in that coil ends to be connected together are extended to the outside as terminals.

FIG. 5C is a circuit diagram of an output-waveform-combining circuit for a two-unit continuous-winding-type integral double resolver according to the present invention, which circuit combines outputs of the 3X VR resolver unit and the 2X VR resolver unit so as to output a 1X resolver output or a 5X resolver output. The circuit of FIG. 5C differs from that of FIG. 5B in that the coils of the two resolver units to be connected are continuously wound so as to eliminate extension of coils to terminals as shown in FIG. 5B.

In FIG. 5A, the resolver unit A is located on the A side and serves as a first stage resolver unit, and the reliever B is located on the B side and serves as a second stage resolver unit.

Opposite ends of the excitation coil AR of the resolver unit A are extended to terminals R1 and R2.

A sin output coil ASS of the resolver unit A in the first stage is connected with a sin input coil (excitation coil) BRS of the resolver unit B in the second stage at points ASBR2 and ASBR4. Similarly, a cos output coil ASC of the resolver unit A in the first stage is connected with a cos input coil (excitation coil) BRC of the resolver unit B in the second stage at points ASBR1 and ASBR3.

Opposite ends of a sin output coil BSS of the resolver unit B in the second stage are extended to terminals S2 and S4. Similarly, opposite ends of a cos output coil BSC of the resolver unit B in the second stage are extended to terminals S1 and S3. Reference letters AT represent salient poles of the rotor of the resolver unit A (3X), and reference letters BT represent salient poles of the rotor of the resolver unit B (2X).

In the circuit of FIG. 5A, when an excitation voltage Vref input between the terminals R1 and R2 is X, a transformation ratio between the input and output coils of the resolver unit A is Ka, and a transformation ratio between the input and output coils of the resolver unit B is Kb, composite output voltages at an arbitrary rotational angle $\theta$ are represented as follows for the following two cases.

(1) In the case where outputs of the 3X VR resolver unit and the 2X VR resolver unit are combined so as to output a 1X resolver output:

```
sin composite output voltage

    = KaKbXsin 3θcos2θ - KaKbXcos3 θsin 2θ

    = KaKbXsin θ                              Eq. 3
```

```
cos composite output voltage

    = KaKbXsin 3θsin2θ + KaKbXcos3 θcos 2θ

    = KaKbXcos θ                              Eq. 4
```

(2) In the case where outputs of the 3X VR resolver unit and the 2X VR resolver unit are combined so as to output a 5X resolver output:

```
sin composite output voltage

    = KaKbXsin 3θcos2θ + KaKbXcos3 θsin 2θ

    = KaKbXsin 5θ                             Eq. 5
```

```
cos composite output voltage

    = - KaKbXsin 3θsin2θ + KaKbXcos3 θcos 2θ

    = KaKbXcos5 θ                             Eq. 6
```

The coil data for the twin resolver shown in FIG. 5A are shown in section (1) of FIG. 8B.

FIG. 8B shows data for the case where outputs of the 3X VR resolver unit and the 2X VR resolver unit are combined so as to output a 1X resolver output or a 5X resolver output. Section (1) of FIG. 8B shows the numbers of coils and connection portions of a conventional twin resolver; section (2) of FIG. 8B shows the numbers of coils and connection portions of an integral double resolver; and section (3) of FIG. 8B shows the numbers of coils and connection portions of a two-unit continuous-winding-type integral double resolver.

Specifically, as shown in section (1) of FIG. 8B, a conventional twin resolver includes three excitation coils (the resolver unit A includes one excitation coil and the resolver unit B includes two excitation coils). The conventional twin resolver includes two sin output coils (each of the resolver units A and B includes a single sin output coil), and two cos output coils (each of the resolver units A and B includes a single cos output coil). That is, the conventional twin resolver includes four output coils in total. The conventional twin resolver includes four connection portions between the output coils of the resolver unit A in the first stage and the input coils of the resolver unit B in the second stage.

Integrated double resolver:

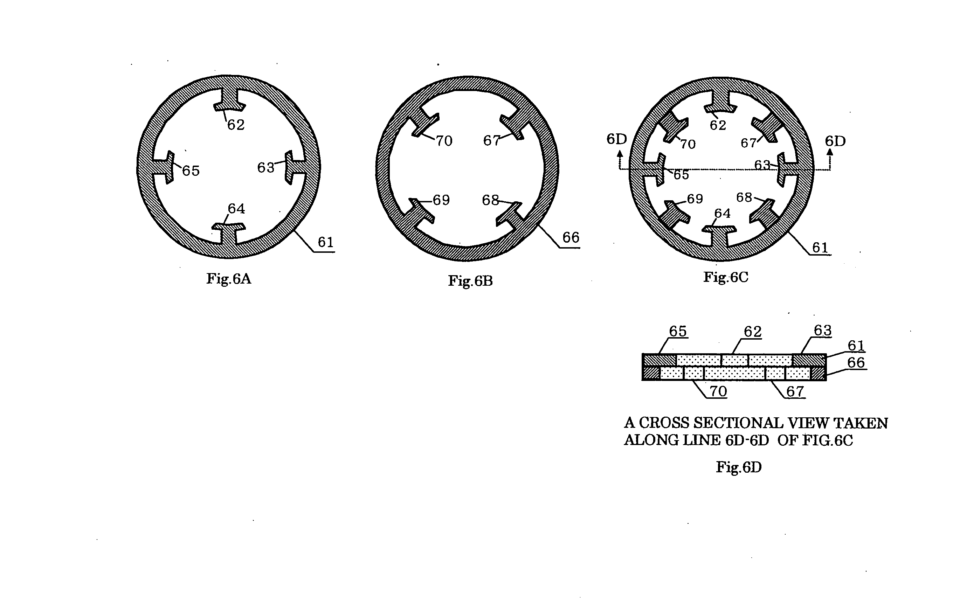

FIGS. 6A to 6D are views showing stacked stators of an integral double resolver. FIGS. 6A and 6B are plan views of stators to be stacked. FIG. 6C is a plan view showing the stacked stators. FIG. 6D is a cross sectional view taken along line 6D-6D of FIG. 6C.

Since the exemplary resolver shown in FIGS. 6A to 6D is of a double type, the resolver includes two stator yokes 61 and 66. M stator yokes (M is an arbitrary integer) may be stacked so as to fabricate a multi-resolver containing M resolver units. In FIGS. 6A to 6D, the rotors are omitted.

In the example of FIGS. 6A to 6D, four magnetic poles 62, 63, 64, and 65 are provided on the stator yoke 61; and four magnetic poles 67, 68, 69, and 70 are provided on the stator yoke 66. The stator yokes of the resolver units are connected together in such a manner that the stator magnetic poles of the first resolver unit are located at angular positions different from those of the stator magnetic poles of the second resolver unit, and the stator magnetic poles of the first resolver unit do not overlap the stator magnetic poles of the second resolver unit in the direction of the center axis. Thus, the stator yokes of the resolver units can be stacked while interference of coils wound around the magnetic poles is avoided.

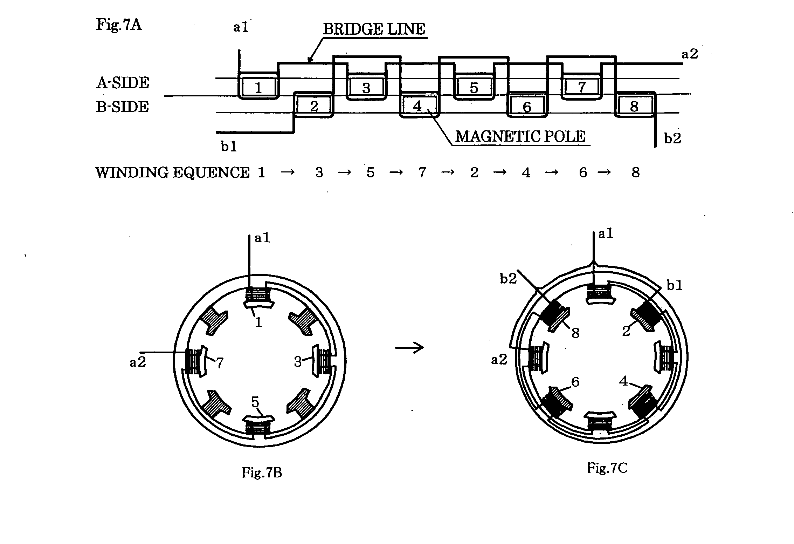

FIGS. 7A to 7C are views of coils of an integral double resolver wound by a conventional winding method. The coils shown in FIGS. 7A to 7C are excitation coils. FIG. 7A is a view showing stator magnetic poles around which coils are wound and which are developed into a straight form. FIG. 7B is a plan view showing a coil wound around stator magnetic poles of a resolver unit on the A side. FIG. 7C is a plan view showing a coil which is wound around stator magnetic poles of a resolver unit on the B side after winding of the coil of the A-side resolver unit.

As shown in FIG. 7B, stator magnetic poles 1, 3, 5, and 7 are provided on the stator yoke of the A-side resolver unit at intervals of 90 degrees in the circumferential direction (rotation direction), with the 12 o'clock position being 0 degrees. Similarly, stator magnetic poles 2, 4, 6, and 8 are provided on the stator yoke of the B-side resolver unit at intervals of 90 degrees in the circumferential direction, starting from the position of 45 degrees. The stator yoke of the A-side resolver unit and the stator yoke of the B-side resolver unit are stacked with a phase shift therebetween so that, as shown in FIG. 7C, the magnetic poles of the stator yokes are arranged at uniform intervals of 45 degrees.

For example, a wiring process is performed in such a manner that coils of the A-side resolver unit are wound, and then coils of the B-side resolver unit are wound.

For the A-side resolver unit, coils are continuously wound around the magnetic poles, from a coil end al to a coil end a2, in the sequence shown in FIG. 7A; i.e., magnetic pole 1 → magnetic pole 3 → magnetic pole 5 → magnetic pole 7. FIG. 7B shows the thus wound coil.

Subsequently, for the B-side resolver unit, coils are continuously wound around the magnetic poles, from a coil end b1 to a coil end b2, in the sequence shown in FIG. 7A; i.e., magnetic pole 2 → magnetic pole 4 → magnetic pole 6 → magnetic pole 8. FIG. 7C shows the thus wound coil. During this winding, bridge lines are formed between the coils wound around the magnetic poles, and are engaged with bridge line engagement portions provided on the stator yokes.

In order to facilitate understanding, in FIGS. 7B and 7C, bridge lines are depicted at positions different from the actual positions. Actually, the bridge lines are disposed on the inner circumferential surfaces of the stator yokes where the magnetic poles are present, so as to prevent the bridge lines from being pinched between the stator yokes of the A-side and B-side resolver units when they are stacked.

FIG. 4B is a circuit diagram of an output-waveform-combining circuit for an integral double resolver which combines outputs of two 1X VR resolver units so as to output a 1X resolver output.

An excitation coil AR of the A-side resolver unit is extended to terminals R1 and R3, and an excitation coil BR of the B-side resolver unit is extended to terminals R2 and R4.

A sin output coil ASS of the A-side resolver unit is extended to terminals S2 and S6, and a sin output coil BSS of the B-side resolver unit is extended to terminals S8 and S4.

A cos output coil ASC of the A-side resolver unit extended to terminals S1 and S5, and a cos output coil BSC of the B-side resolver unit is extended to terminals S7 and S3.

Since the configuration of the remaining portion is identical to that of FIG. 4A, description therefor is omitted.

FIG. 8A shows data for the case where two 1X output signals are combined so as to output a 1X resolver output. Section (2) of FIG. 8A shows the numbers of coils and connection portions of an integral double resolver.

Specifically, as shown in section (2) of FIG. 8A, a conventional integral double resolver includes two excitation coils (each of the resolver units A and B includes a single excitation coil). The conventional integral double resolver includes two sin output coils (each of the resolver units A and B includes a single sin output coil), and two cos output coils (each of the resolver units A and B includes a single cos output coil). That is, the conventional integral double resolver includes four output coils in total. The conventional integral double resolver has no connection portion.

FIG. 5B is a circuit diagram of an output-waveform-combining circuit for an integral double resolver which combines outputs of the 3X VR resolver unit and the 2X VR resolver unit so as to output a 1X resolver output or a 5X resolver output.

In FIG. 5B, the resolver unit A is located on the A side and serves as a first stage resolver unit, and the resolver unit B is located on the B side and serves as a second stage resolver unit.

Opposite ends of an excitation coil AR of the resolver unit A are extended to terminals R1 and R2.

A sin output coil ASS of the resolver unit A in the first stage is extended to terminals AS2 and AS4. Similarly, a cos output coil ASC of the resolver unit A in the first stage is extended to terminals AS1 and AS3.

A sin input coil (excitation coil) BRS of the resolver unit B in the second stage is extended to terminals BR2 and BR4. Similarly, a cos input coil (excitation coil) BRC of the resolver unit B in the second stage is extended to terminals BR1 and BR3.

Opposite ends of a sin output coil BSS of the resolver unit B in the second stage are extended to terminals S2 and S4. Similarly, opposite ends of a cos output coil BSC of the resolver unit B in the second stage are extended to terminals S1 and S3. Reference letters AT represent salient poles of the rotor of the resolver unit A (3X), and reference letters BT represent salient poles of the rotor of the resolver unit B (2X).

FIG. 8B shows data for the case where outputs of the 3X VR resolver unit and the 2X VR resolver unit are combined so as to output a 1X resolver output or a 5X resolver output. Section (2) of FIG. 8B shows the numbers of coils and connection portions of an integral double resolver.

Specifically, the coil data of the conventional integral double resolver are as follows.

The conventional integral double resolver includes three excitation coils (the resolver unit A includes one excitation coil and the resolver unit B includes two excitation coils). The conventional integral double resolver includes two sin output coils (each of the resolver units A and B includes a single sin output coil), and two cos output coils (each of the resolver units A and B includes a single cos output coil). That is, the conventional integral double resolver includes four output coils in total. The conventional integral double resolver includes no connection portions.

When a composite output is to be obtained from voltage signals output from M resolver units (M is an arbitrary integer), since the number of resolver units is M, the number of coils to be wound becomes M times that of a single resolver unit, and thus, the number of bridge lines between the coils becomes M times that of a single resolver unit.

The bridge line portions of the winding of each resolver unit are likely to pick up noise, which deteriorates accuracy, and are weak against vibration. Therefore, the bridge lines are preferably small in number and short. Moreover, when signal outputs from M resolver units are combined, respective output coils must be connected. Such connection requires a connection structure and connection work, which makes production of resolvers difficult.

The present inventors have investigated a motor and a generator, which are rotating machines similar to resolvers, from the same point of view. As a result, the inventors have found that a technique of continuously winding coils in order to simplify the connection structure and connection work are disclosed in, for example, Japanese Patent Application Laid-Open (*kokai*) Nos. H01-122356 and 2002-252943. However, the disclosed technique is adapted to continuously wind each of stator coils of three phases (U, V, W) across a plurality of magnetic poles; i.e., is adapted to continuously wind a coil of one phase within a single rotating machine, and the technique cannot be employed for resolvers. In other words, the disclosed technique does not premise the structure of a rotating machine including a plurality of machine units assembled together, which structure corresponds to the structure of a resolver including a plurality of resolver units for which coils are wound individually and which are assembled together. Moreover, the disclosed technique is not directed to a rotating machine in which a plurality of kinds of coils are wound around magnetic poles, which corresponds to the structure in which input (excitation) and output coils are wound around magnetic poles in a layered condition.

SUMMARY OF THE INVENTION

In view of the foregoing, an object of the present invention is to provide a continuous winding method for a multi-resolver which includes a plurality of stacked resolver units, the method reducing the number of connection points and the length of bridge lines.

Another object of the present invention is to provide a multi-resolver to which the continuous winding method is applied.

In order to achieve the above objects, the present invention provide a continuous winding method for a multi-resolver which includes a plurality of stacked resolver units in which each of coils for different purposes (e.g., an excitation coil, a sin output coil, and a cos output coil) is continuously wound around predetermined magnetic poles of at least two of the resolver units in sequence in a rotation direction of a shaft or in a direction opposite thereto, as well as a multi-resolver to which the continuous winding method is applied.

Specifically, stator yokes of M resolver units (M is an arbitrary integer) are joined together so as to obtain an integral-type multi-resolver including M resolver units. Unlike the case of a conventional multi-resolver in which output signals from output coils of the resolver units are combined by means of a post-processing circuit, a desired output signal can be obtained directly from output coils, because the stators of the resolver units are configured so as to enable coils of the resolver units to be continuously wound to obtain a desired resolver output.

The present invention employs a continuous winding method and winding structure in which a coil is continuously wound around selected stator magnetic poles of the stacked resolver units in a rotational direction (or in the order of rotational angle), from a magnetic pole on the side toward one end of the resolver (e.g., on the upper side of the resolver) and to a magnetic pole on the side toward the other end of the resolver (e.g., on the lower side of the resolver). The present continuous winding method and structure differ from a conventional winding method and structure in which sin (sine) output signals and cos (cosine) output signals output from M resolver units are combined by means of a post-processing circuit.

In other words, the present invention employs a winding method and structure in which coils of the stacked resolver units are formed by winding a single wire around selected stator magnetic poles of the stacked resolver units in ascending order or descending order of rotational angle, from a magnetic pole on the side toward one end of the resolver (e.g., on the upper side of the resolver) and to a magnetic pole on the side toward the other end of the resolver (e.g., on the lower side of the resolver). Therefore, a composite output signal can be output from terminals of a single winding by means of continuous winding performed to satisfy a predetermined computation equation, without the necessity for post-processing means.

Each of coils for different uses (e.g., an excitation coil, a sin output coil, and a cos output coil) is independently and continuously wound around predetermined magnetic poles; i.e., the entirety of each coil is formed from a single wire. Of stator magnetic poles, magnetic poles around which a coil, such as an excitation coil, a sin output coil, or a cos output coil, is to be wound are previously determined in a design stage. The stator magnetic poles and each coil have a predetermined relation. The winding direction at each magnetic pole is determined in accordance with the polarity of each magnetic pole.

Specifically, the present invention provides a continuous winding method for a multi-resolver including m resolver units (m is an integer not less than 2) joined together, each resolver unit comprising a stator and a rotor, the stator including a stator yoke having a plurality of magnetic poles projecting from the stator yoke where the number of the magnetic poles corresponds to a shaft angle multiplier n (n is an integer not less than 1) and coils for predetermined uses wound around selected magnetic poles, and the rotor having n salient poles, wherein a coil for each use is independently and continuously wound around selected stator magnetic poles of the m resolver units.

Preferably, the coils for predetermined uses include at least one of an excitation coil, a sin output coil, and a cos output coil. More preferably, the coils for predetermined uses include an excitation coil, a sin output coil, and a cos output coil.

Preferably, a coil for a predetermined use is continuously wound around stator magnetic poles suitable for the use in sequence in a rotation direction.

Preferably, the direction of winding the excitation coil at each magnetic pole is determined in accordance with the polarity of the magnetic pole.

The preset invention also provides a multi-resolver including m resolver units (m is an integer not less than 2) joined together, each resolver unit comprising a stator including a stator yoke having a plurality of magnetic poles projecting from the stator yoke where the number of the magnetic poles corresponds to a shaft angle multiplier n (n is an integer not less than 1) and coils for predetermined uses wound around selected magnetic poles; and a rotor having n salient poles, wherein a coil for each use is independently and continuously wound around selected stator magnetic poles of the m resolver units.

Preferably, the coils for predetermined uses include at least one of an excitation coil, a sin output coil, and a cos output coil. More preferably, the coils for predetermined uses include an excitation coil, a sin output coil, and a cos output coil.

Preferably, a coil for a predetermined use is continuously wound around stator magnetic poles suitable for the use in sequence in a rotation direction.

Preferably, the stators of the resolver units are joined together in such a manner that the stator magnetic poles of the resolver units are located at different rotational angles and do not overlap one another in an axial direction.

According to the present invention, each of coils for predetermined uses, such as an excitation coil, a sin output coil, and a cos output coil, are continuously wound around selected magnetic poles in sequence in the rotational direction of the shaft or in the opposite direction.

Therefore, the present invention provides the following advantages.

(1) Conventionally required coil connection work becomes unnecessary.
(2) Since the number of coils decreases, the number of bridge lines decreases.
 Specifically, in the case of a resolver including M resolver units (M is an arbitrary integer), the number of bridge lines decreases to 1/M, and the length of the bridge lines decreases to about 1/M. Therefore, a simple multi-resolver having the reduced number of bridge lines can be configured.
(3) Since the coil winding time per resolver can be shortened by virtue of the reduced number and length of bridge lines, production time can be shortened.

BRIEF DESCRIPTION OF THE DRAWINGS

Various other objects, features and many of the attendant advantages of the present invention will be readily appreciated as the same becomes better understood by reference to the following detailed description of the preferred embodiments when considered in connection with the accompanying drawings, in which:

FIGS. 1A to 1C are wiring diagrams each showing the case where a two-unit continuous winding method is applied to an integral double resolver;
FIGS. 2A and 2B are wiring diagrams showing the case where a two-unit continuous winding method is applied to an integral double resolver, and two coils are continuously wound around selected magnetic poles;
FIG. 3 is a cross sectional view of a conventional twin resolver;
FIGS. 4A to 4C are circuit diagrams of output-waveform-combining circuits for combining outputs of two 1X VR resolver units so as to output a 1X resolver output;
FIGS. 5A to 5C are circuit diagrams of output-waveform-combining circuits for combining outputs of a 3X VR resolver unit and a 2X VR resolver unit so as to output a 1X or a 5X resolver output;
FIGS. 6A to 6D show stacked stators of an integral double resolver;
FIGS. 7A to 7C are wiring diagrams showing the case where a conventional winding method is applied to an integral double resolver; and
FIGS. 8A and 8B are explanatory diagrams each showing the numbers of coils and connection portions for different winding methods.

DESCRIPTION OF THE PREFERRED EMBODIMENTS

Embodiments of the present invention will now be described with reference to the drawings.

First Embodiment:

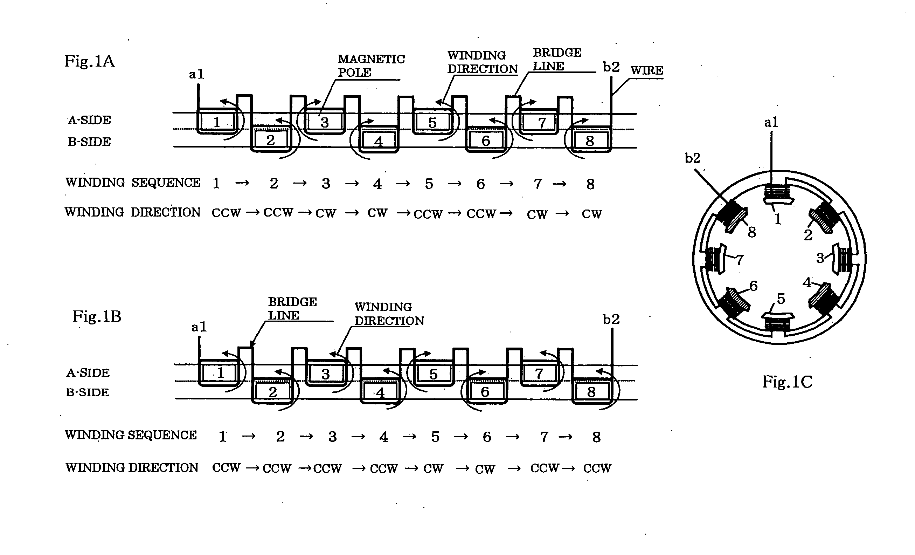

FIGS. 1A to 1C are wiring diagrams each showing the case where a two-unit continuous winding method is applied to an integral double resolver. The present embodiment shows an example method for winding an excitation coil. Specifically, FIG. 1A is a wiring diagram showing linearly developed stator magnetic poles and a coil for the case where the direction of coil winding at each magnetic pole is changed alternately in the rotational direction. FIG. 1B is a wiring diagram showing linearly developed stator magnetic poles and a coil for the case where the direction of coil winding at each magnetic pole is changed irregularly in the rotational direction. FIG. 1C is a plan view showing the coil wound around stator magnetic poles of A-side and B-side resolver units.

<Example of FIG. 1A>

The A-side and B-side resolver units are stacked as shown in FIG. 1A, in which a joint interface between the resolver units is represented by a dotted line, and outer surfaces of the resolver units are represented by sold lines. As a result, the magnetic poles of the A-side resolver unit and the magnetic poles of the B-side resolver unit are alternately arranged in the circumferential direction of the stator yokes in such a manner that the magnetic poles are staggered between upper and lower rows.

A wiring process is performed as follows by use of a single wire. The wire is wound around a first magnetic pole of the A-side resolver unit, and then is wound around a first magnetic pole of the B-side resolver unit adjacent to the first magnetic pole of the A-side resolver unit. Subsequently, the wire is wound around a second magnetic pole of the A-side resolver unit adjacent to the first magnetic pole of the B-side resolver unit, and is then wound around a second magnetic pole of the B-side resolver unit adjacent to the second magnetic pole of the A-side resolver unit. Such winding operation is performed in sequence in the rotational direction.

Respective coils of the magnetic poles are formed by winding the wire around the magnetic poles, from a coil end a1 to a coil end b2, in the sequence shown in FIG. 1A; i.e., magnetic pole 1 → magnetic pole 2 → magnetic pole 3 → magnetic pole 4 → magnetic pole 5 → magnetic pole 6 → magnetic pole 7 → magnetic pole 8. FIG. 1C shows the thus wound coil.

The winding direction at each magnetic pole is determined in accordance with the polarity thereof. In the present example, as shown in FIG. 1A, the winding directions at the magnetic poles 1 to 8 are changed in the following manner: counterclockwise (magnetic pole 1) → counterclockwise (magnetic pole 2) → clockwise (magnetic pole 3) → clockwise (magnetic pole 4) → counterclockwise (magnetic pole) 5 → counterclockwise (magnetic pole 6) → clockwise (magnetic pole 7) → clockwise (magnetic pole 8).

As described above, the present invention employs a winding method and structure in which coils of the stacked resolver units are formed by winding a single wire around selected stator magnetic poles of the stacked resolver units in ascending or descending order of rotational angle, from a magnetic pole on the side toward one end of the resolver (e.g., on the upper side of the resolver) and to a magnetic pole on the side toward the other end of the resolver (e.g., on the lower side of the resolver). Therefore, bridge lines can be shortened to a length required for establishing connection between adjacent magnetic poles in the circumferential direction, and winding work becomes simpler accordingly. Moreover, unlike the case of the conventional method as shown in FIG. 7A, bridge lines do not cross, and thus can be shortened.

<Example of FIG. 1B>

FIG. 1B shows an example in which the directions of magnetic flux passing through magnetic poles are irregularly changed; for example, so as to cause magnetic flux to come from two poles and enter one pole, unlike the case shown in FIG. 1A in which the directions of magnetic flux passing through magnetic poles are regularly inverted. Specifically, in each resolver unit in Fig 1B, a wire is wound counterclockwise around two successive magnetic poles, and then wound clockwise around a subsequent magnetic pole. After that, the remaining coils are formed in the same manner.

The example of FIG. 1B is identical with that of FIG. 1A except for the winding direction at each magnetic pole. The magnetic poles of the A-side resolver unit and the magnetic poles of the B-side resolver unit are alternately arranged in the circumferential direction of the stator yokes in such a manner that the magnetic poles are staggered between upper and lower rows.

A wiring process is performed as follows by use of a single wire. The wire is wound around a first magnetic pole of the A-side resolver unit, and is then wound around a first magnetic pole of the B-side resolver unit adjacent to the first magnetic pole of the A-side resolver unit. After that, the wire is wound around a second magnetic pole of the A-side resolver unit adjacent to the first magnetic pole of the B-side resolver unit, and then is wound around a second magnetic pole of the B-side resolver unit adjacent to the second magnetic pole of the A-side resolver unit. Such winding operation is performed in sequence in the rotational direction.

The winding direction at each magnetic pole is determined in accordance with the polarity of each magnetic pole. In the present example, as shown in FIG. 1B, the winding directions at the magnetic poles 1 to 8 are changed in such the following manner: counterclockwise (magnetic pole 1) → counterclockwise (magnetic pole 2) → counterclockwise (magnetic pole 3) → counterclockwise (magnetic pole 4) → clockwise (magnetic pole5) → clockwise (magnetic pole 6) → counterclockwise (magnetic pole 7) → counterclockwise (magnetic pole 8).

As in the case of the example of FIG. 1A, in the example of FIG. 1B, bridge lines can be shortened to a length required for establishing connection between adjacent magnetic poles in the circumferential direction, and winding work becomes simpler accordingly. Moreover, unlike the conventional method as shown in FIG. 7A, bridge lines do not cross, and thus can be shortened.

Furthermore, since the winding direction at each magnetic pole can be changed irregularly, the polarities of the magnetic poles can be determined arbitrarily.

Second Embodiment:

In the above-described first embodiment, a wire is continuously wound around all the magnetic poles of each resolver unit so as to form, for example, an excitation coil. In contrast, in the second embodiment, a wire is continuously wound around selected magnetic poles of each resolver unit so as to form, for example, a sin output coil or a cos output coil.

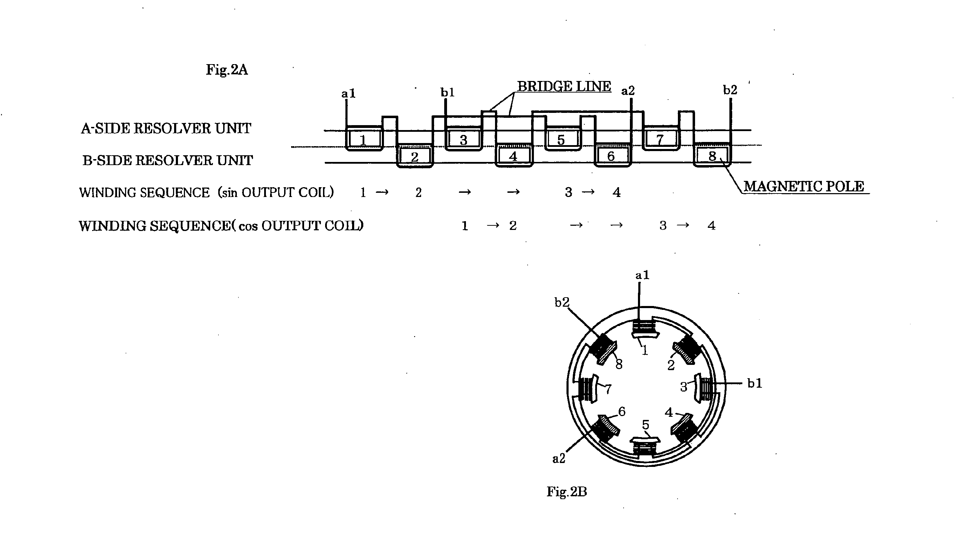

FIGS. 2A and 2B are wiring diagrams showing the case where a two-unit continuous winding method is applied to an integral double resolver, and two coils are continuously wound around selected magnetic poles. Specifically, FIG. 2A is a wiring diagram showing linearly developed stator magnetic poles and coils for the case where the coils are continuously wound around desired magnetic poles, with intervening magnetic poles skipped. FIG. 2B is a plan view showing the coils wound around stator magnetic poles of A-side and B-side resolver units. Only portions which differ from the first embodiment will be described.

In the illustrated example, a sin output coil is formed by winding a wire around the magnetic poles 1, 2, 5, and 6 in the sequence of magnetic pole 1 → magnetic pole 2 → (skip) → magnetic pole 5 → magnetic pole 6. Also, a cos output coil is formed by winding a wire around the magnetic poles 3, 4, 7, and 8 in the sequence of magnetic pole 3 → magnetic pole 4 → (skip) → magnetic pole 7 → magnetic pole 8.

Conventionally, there has been no resolver in which a wire is continuously wound across a plurality of resolver units.

The resolver according to the second embodiment can eliminate coil connection portions, and minimize the number of output terminals. Accordingly, the resolver according to the second embodiment can facilitate manufacture of an integral double resolver, and simplify the structure thereof.

Third Embodiment:

FIG. 4C is a circuit diagram of an output-waveform-combining circuit for a two-unit continuous-winding-type integral double resolver, which circuit combines outputs of two 1X VR resolver units so as to output a 1X output.

An excitation coil AR of an A-side resolver unit and an excitation coil BR of an B-side resolver unit are formed by means of a continuous winding, and opposite ends of the winding are connected to terminals R1 and R2. The excitation coils are wound around all the magnetic poles of the A-side resolver unit and the B-side resolver unit in ascending order of rotational angle. A sin output coil ASS of the A-side resolver unit and a sin output coil BSS of the B-side resolver unit are formed by means of a continuous winding, and opposite ends of the winding are connected to terminals S2 and S4. A cos output coil ASC of the A-side resolver unit and a cos output coil BSC of the B-side resolver unit are formed by means of a continuous winding, and opposite ends of the winding are connected to terminals S1 and S3. Since the remaining portion has the same configuration as that of FIG. 4B, description therefor is omitted.

FIG. 8A shows data for the case where two 1X output signals are combined so as to output a 1X resolver output. Section (3) of FIG. 8A shows the numbers of coils and connection portions of a two-unit continuous-winding-type integral double resolver.

Specifically, as shown in section (3) of FIG. 8A, the two-unit continuous-winding-type integral double resolver of the present invention has one excitation coil continuously wound across the A-side and B-side resolver units, and two output coils; i.e., one sin output coil continuously wound across the A-side and B-side resolver units, and one cos output coil continuously wound across the A-side and B-side resolver units. The two-unit continuous-winding-type integral double resolver has no coil connection portion.

Since the equations for obtaining sin and cos composite output voltages are identical with those described previously, their description is omitted.

As described above, the two-unit continuous-winding-type integral double resolver of the present invention can eliminate coil connection portions, and minimize the number of output terminals. Accordingly, the resolver according to the second embodiment can facilitate manufacture of an integral double resolver, and simplify the structure thereof.

Fourth Embodiment:

FIG. 5C is a circuit diagram of an output-waveform-combining circuit for a two-unit continuous-winding-type integral double resolver which circuit combines outputs of a 3X VR resolver unit and a 2X VR resolver unit so as to output a 1X resolver output or a 5X resolver output.

In FIG. 5C, the resolver unit A is located on the A side and serves as a first stage resolver unit, and the resolver unit B is located on the B side and serves as a second stage resolver unit.

Opposite ends of the excitation coil AR of the resolver unit A are extended to terminals R1 and R2.

A sin output coil ASS of the resolver unit A in the first stage and a sin input coil (excitation coil) BRS of the resolver unit B in the second stage are formed by means of a continuous winding (in section (3) of FIG. 8B, this continuous winding is counted as an output coil).

A cos output coil ASC of the resolver unit A in the first stage and a cos input coil (excitation coil) BRC of the resolver unit B in the second stage are formed by means of a continuous winding (in section (3) of FIG. 8B, this continuous winding is counted as an output coil).

Opposite ends of a sin output coil BSS of the resolver unit B in the second stage are extended to terminals S2 and S4. Similarly, opposite ends of a cos output coil BSC of the resolver unit B in the second stage are extended to terminals S1 and S3. Reference letters AT represent salient poles of the rotor of the resolver unit A (3X), and reference letters BT represent salient poles of the rotor of the resolver unit B (2X).

FIG. 8B shows data for the case where outputs of the 3X VR resolver unit and the 2X VR resolver unit are combined so as to output a 1X resolver output or a 5X resolver output. Section (3) of FIG. 8B shows the numbers of coils and connection portions of a two-unit continuous-winding-type integral double resolver of the present invention.

Specifically, as shown in section (3) of FIG. 8B, the two-unit continuous-winding-type integral double resolver of the present invention has one excitation coil (the excitation coil of the A-side resolver unit), and four output coils (each of the A-side and B-side resolver units has one sin output coil and one cos output coil). The two-unit continuous-winding-type integral double resolver has no coil connection portion.

Since the equations for obtaining sin and cos composite output voltages are identical with those described previously, their description is omitted.

As described above, the two-unit continuous-winding-type integral double resolver of the present invention can eliminate coil connection portions, and minimize the number of output terminals. Accordingly, the resolver according to the second embodiment can facilitate manufacture of an integral double resolver, and simplify the structure thereof.

Obviously, numerous modifications and variations of the present invention are possible in light of the above teachings. It is therefore to be understood that within the scope of the appended claims, the present invention may be practiced otherwise than as specifically described herein.

**Claims**

1. A continuous winding method for a multi-resolver including m resolver units (m is an integer not less than 2) joined together, each resolver unit comprising a stator and a rotor, the stator including a stator yoke having a plurality of magnetic poles projecting from the stator yoke where the number of the magnetic poles corresponds to a shaft angle multiplier n (n is an integer not less than 1) and coils for predetermined uses wound around selected magnetic poles, and the rotor having n salient poles, wherein

   a coil for each use is independently and continuously wound around selected stator magnetic poles of the m resolver units.

2. A continuous winding method for a multi-resolver according to claim 1, wherein the coils for predetermined uses include at least one of an excitation coil, a sin output coil, and a cos output coil.

3. A continuous winding method for a multi-resolver according to claim 1, wherein the coils for predetermined uses include an excitation coil, a sin output coil, and a cos output coil.

4. A continuous winding method for a multi-resolver according to claim 1, wherein a coil for each use is continuously wound around stator magnetic poles suitable for the use in sequence in a rotation direction.

5. A continuous winding method for a multi-resolver according to claim 2, wherein the direction of winding the excitation coil at each magnetic pole is determined in accordance with the polarity of the magnetic pole.

6. A continuous winding method for a multi-resolver according to claim 3, wherein the direction of winding the excitation coil at each magnetic pole is determined in accordance with the polarity of the magnetic pole.

7. A multi-resolver including m resolver units (m is an integer not less than 2) joined together, each resolver unit comprising:

   a stator including a stator yoke having a plurality of magnetic poles projecting from the stator yoke where the number of the magnetic poles corresponds to a shaft angle multiplier n (n is an integer not less than 1) and coils for predetermined uses wound around selected magnetic poles; and
   a rotor having n salient poles,

   wherein a coil for each use is independently and continuously wound around selected stator magnetic poles of the m resolver units.

8. A multi-resolver according to claim 7, wherein the coils for predetermined uses include at least one of an excitation coil, a sin output coil, and a cos output coil.

9. A multi-resolver according to claim 7, wherein the coils for predetermined uses include an excitation coil, a sin output coil, and a cos output coil.

10. A multi-resolver according to claim 7, wherein a coil for each use is continuously wound around stator magnetic poles suitable for the use in sequence in a rotation direction.

11. A multi-resolver according to claim 7, wherein the stators of the resolver units are joined together in such a manner that the stator magnetic poles of the resolver units are located at different rotational angles and do not overlap one another in an axial direction.

Fig.1A

A-SIDE
B-SIDE

MAGNETIC POLE
WINDING DIRECTION
BRIDGE LINE

a1
b2 WIRE

WINDING SEQUENCE 1 → 2 → 3 → 4 → 5 → 6 → 7 → 8

WINDING DIRECTION CCW → CW → CCW → CW → CCW → CW → CCW → CW

Fig.1B

A-SIDE
B-SIDE

BRIDGE LINE
WINDING DIRECTION

a1
b2

WINDING SEQUENCE 1 → 2 → 3 → 4 → 5 → 6 → 7 → 8

WINDING DIRECTION CCW → CCW → CCW → CW → CW → CW → CCW → CCW

Fig.1C

a1
b2

Fig.2A

A-SIDE RESOLVER UNIT

B-SIDE RESOLVER UNIT

WINDING SEQUENCE (sin OUTPUT COIL)    1 →    2    →    →    3 → 4

WINDING SEQUENCE( cos OUTPUT COIL)         1 → 2    →    →    3 → 4

a1    b1    BRIDGE LINE    a2    b2

1    3    5    7

2    4    6    8

MAGNETIC POLE

Fig.2B

EP 1 605 575 A2

13

**Fig.3**

EP 1 605 575 A2

EP 1 605 575 A2

Fig.4A
Fig.4B
Fig.4C

15

Fig.5A

Fig.5B

Fig.5C

Fig.6A

Fig.6B

Fig.6C

A CROSS SECTIONAL VIEW TAKEN
ALONG LINE 6D-6D OF FIG.6C

Fig.6D

EP 1 605 575 A2

EP 1 605 575 A2

Fig.7A

a1

BRIDGE LINE

a2

A-SIDE

B-SIDE

| 1 | | 3 | | 5 | | 7 | |
|---|---|---|---|---|---|---|---|

| | 2 | | 4 | | 6 | | 8 |

b1

MAGNETIC POLE

b2

WINDING EQUENCE  1  →  3 → 5 → 7 → 2 → 4 → 6 → 8

a1

a2 7 · 3
1
5

Fig.7B

→

a1

b2 · b1
8 · 2
a2
6 · 4

Fig.7C

Fig.8A

CASEWHERE 1X OUTPUT AND 1X OUTPUT ARE COMBINED TO OUTPUT 1X OUTPUT

| | | |
|---|---|---|
| 2 EXCITATION COILS<br>4 OUTPUT COILS<br>3 CONNECTION PORTIONS | 2 EXCITATION COILS<br>4 OUTPUT COILS<br>NO CONNECTION PORTION | 1 EXCITATION COIL<br>2 OUTPUT COIL<br>NO CONNECTION PORTION |
| (1)CONVENTIONAL TWIN RESOLVER | (2)INTEGRAL DOUBLE RESOLVER | (3)TWO-UNIT CONTINUOUS-WINDING-TYPE INTEGRAL DOUBLE RESOLVER |

Fig.8B

CASE WHERE 3X OUTPUT AND 2X OUTPUT ARE COMBINED TO OUTPUT 1X OUTPUT OR 5X OUTPUT

| | | |
|---|---|---|
| 3 EXCITATION COILS<br>4 OUTPUT COILS<br>4 CONNECTION PORTIONS | 3 EXCITATION COILS<br>4 OUTPUT COILS<br>NO CONNECTION PORTION | 1 EXCITATION COIL<br>4 OUTPUT COILS<br>NO CONNECTION PORTION |
| (1)CONVENTIONAL TWIN RESOLVER | (2)INTEGRAL DOUBLE RESOLVER | (3)TWO-UNIT CONTINUOUS-WINDING-TYPE INTEGRAL DOUBLE RESOLVER |

EP 1 605 575 A2